# EUROPEAN PATENT APPLICATION

(11) **EP 2 725 814 A1**
(43) Date of publication of application: **30.04.2014**
(21) Application number: 12306332.3
(22) Date of filing: 26.10.2012
(51) Int. Cl.: H04N 21/4223, H04N 21/45, H04N 21/454, H04N 21/422

(54) **Age/content adaptation checking system**

(71) Applicant: Alcatel Lucent, 75007 Paris (FR)
(72) Inventor: Nouri, Marwen, 91620 Nozay (FR); Sayadi, Bessem, 91620 Nozay (FR)
(74) Representative: Hervouet, Sylvie

(57) **Abstract**

An age/content adaptation checking system (1), usable with a multimedia content displaying platform (2), for checking an adaptation between watcher(s) (17) and a displayed multimedia content, comprising: a watcher detector (10), for detecting any watcher (17) present in a watching area of said multimedia content displaying platform (2), an age determiner (20) for determining an age (21) of each detected watcher (17), a rank retriever (40) for retrieving a rank (41) of said displayed multimedia content, and a comparator (50) for comparing said determined age(s) (21) to said retrieved rank (41) and applying an action (52), depending on the result of said comparison.

## Description

### TECHNICAL FIELD

The technical field is the one of multimedia content displaying platforms and more particularly the managing of the adaptation of a multimedia content with its watchers.

### BACKGROUND

The present disclosure is related to systems designed to help a watcher or a person responsible of said watcher, such as a parent, to determine if said multimedia content displayed is adapted to said watcher, and to eventually take corresponding actions.

Multimedia content displaying platforms, such as televisions, set top boxes, broadcasting networks, Internet, Smartphones, etc. are multiplying and individualizing nowadays. They offer a wide range of multimedia content comprising texts, images, video and/or audio contents. However, sometimes a given multimedia content may not be appropriate/adapted to a given watcher, while being adapted to another watcher.

Some approaches exists in prior art to deal with said adaptation problem.

A prior art approach consists in locking some potentially not adapted multimedia channel or multimedia content by a password or a pin code. The multimedia content cannot then be accessed and watched until an authorized person, in possession of said password, has provided said password to the system. Such an approach is wholly based on said password. It becomes useless if said password is corrupted. Such approach does not consider the watchers. For example, once a multimedia content has been unlocked, by an authorized person, e.g. for watchers adapted at the time of the unlocking, there is no more check later on and a new, possibly not adapted watcher may enter the watching area.

Another prior art approach consists in displaying over a displayed multimedia content a pictogram indicative of the intended audience of said multimedia content, e.g. in the form of an age range of an adapted watcher. Said pictogram is very important but not enough visible. However, since such pictogram is disturbing, it is generally displayed only during a limited time, e.g. at the beginning of the display. Such an approach has different drawbacks. First said pictogram may simply be ignored by a not adapted watcher. Second, it is not displayed at the right time: when a not adapted watcher is or enters in the watching area.

All these prior art approaches are mainly focused on the multimedia content. They generally do not take account the watchers, their dynamic: a watcher entering a watching area where a multimedia content displayed is not adapted to him, and their heterogeneity: among watchers present in a watching area some watchers are adapted while at least one watcher may be not adapted to the multimedia content displayed.

### SUMMARY

The aim of the present disclosure is to remedy these drawbacks by providing an alternative or complementary system taking account of the effective watchers of a multimedia content.

An embodiment concerns an age/content adaptation checking system, usable with a multimedia content displaying platform, for checking an adaptation between watcher(s) and a displayed multimedia content, comprising: a watcher detector, for detecting any watcher present in a watching area of said multimedia content displaying platform, an age determiner for determining an age for each detected watcher, a rank retriever for retrieving a rank of said displayed multimedia content, and a comparator for comparing said determined age(s) to said retrieved rank and applying an action, depending on the result of said comparison.

According to another embodiment, said watcher detector further comprises: a motion detector, for detecting any motion in said watching area, and a person extractor for extracting a person out of a detected motion.

According to another embodiment, said system further comprises a current watchers database for registering any detected watcher present in said watching area.

According to another embodiment, said watcher detector further comprises: a new watcher checker for checking if an extracted person is already registered in said current watchers database, said extracted person being considered as a detected watcher if said extracted person is not already registered in said current watchers database.

According to another embodiment, said age determiner further comprises: a face image retriever, for retrieving at least one face image of each detected watcher, and an age estimator for estimating an age of any detected watcher from a retrieved face image of said detected watcher, said estimated age becoming a determined age.

According to another embodiment, said age determiner further comprises: a best image provider for providing the most frontal face image among said at least one retrieved face image.

According to another embodiment, said best image provider further comprises: a face analyzer for analyzing a retrieved face image and for determining relative positions of eyes and nose in said face image, and an orientation determiner for determining an orientation of a face in a retrieved face image from relative positions of eyes and nose in said retrieved face image.

According to another embodiment, said system further comprises a usual watchers database for registering usual watchers of said multimedia content displaying platform and their respective ages.

According to another embodiment, said age determiner further comprises: an age retriever for retrieving an age of a detected watcher from said usual watchers database if said detected watcher is present in said usual watcher database, said retrieved age becoming a determined age.

According to another embodiment, said comparator further comprises at least one policy defining how to compare said determined age(s) of said detected watcher(s) to said retrieved rank, to determine if said detected watcher(s) is/are adapted to said displayed multimedia content, and which action to apply.

According to another embodiment, said comparator is designed to select at least one action among: displaying a warning on said multimedia content displaying platform, and/or stopping the display of said multimedia content, and/or hiding or blurring said multimedia content, and/or sending an alert on any other predefined media, such as SMS, email or another display.

According to another embodiment, said comparator is designed to select no action when age(s) and rank are adapted.

### BRIEF DESCRIPTION OF THE DRAWINGS

Others features, details and advantages of the invention will become more apparent from the detailed illustrating description given hereafter with respect to the drawings on which:
- Figure 1 illustrates a typical environment of the disclosure,
- Figure 2 functionally illustrates a possible embodiment of an age/content adaptation checking system.

### DETAILED DESCRIPTION

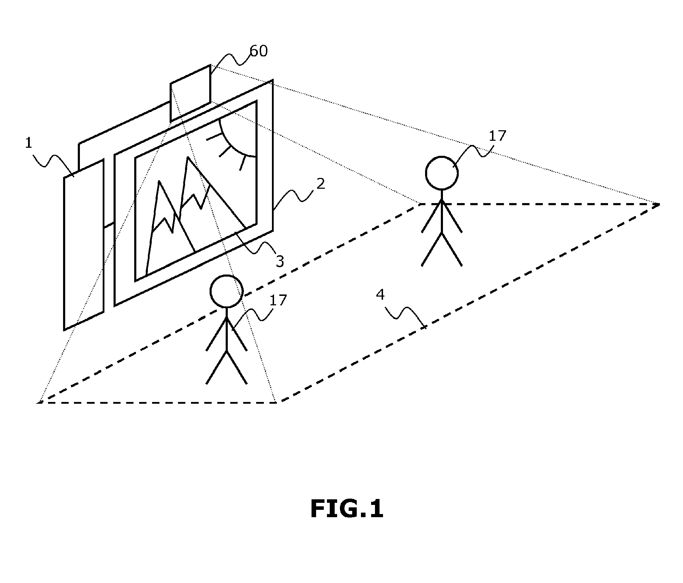

Figure 1 illustrates a typical use case of a multimedia content displaying platform 2. In the present context, a multimedia content 3 can be a text, an interactive internet session, an audio program, a video program, a combination of the previous or any other equivalent content. A multimedia content displaying platform 2 is thus any platform able to display such a multimedia content 3. It can be a television set, a set-top box, a computer, a personal tablet, a smartphone or any other equivalent platform. One can here distinguish between a platform 2 intended to be watched by a single watcher 17, such a as a smartphone, and a platform 2 intended to be watched by several watchers 17, such as a familial television set. According to an embodiment, an age/content adaptation checking system 1 as currently disclosed is more beneficial to a several watchers platform 2.

Such a multimedia content displaying platform 2 mainly comprises a display screen on which said multimedia content 3 is displayed. In addition it may also comprise storing and computing capacities. At least one watcher 17 may be located in a watching area 4 in order to watch said multimedia content 3.

The age/content adaptation checking system 1 is advantageously located near the platform 2 to which it is interfaced and near the watchers 17. However, this is not mandatory. Said age/content adaptation checking system 1 may also be located away form said platform 2.

As will be detailed later on, the age/content adaptation checking system 1 either comprises its own capturing means 60 or interfaces an already existing capturing means 60. Said capturing means 60 is advantageously located so as to be able to capture information over said watching area 4.

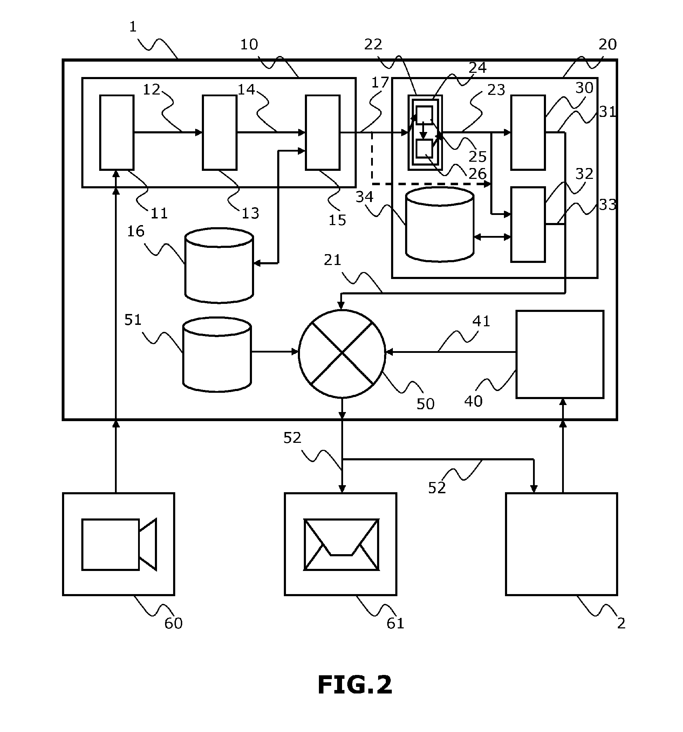

Figure 2 illustrate a functional possible embodiment of an age/content adaptation checking system 1. On said figure functions are figured by boxes. Arrows between said functional boxes are illustrating data flows exchanged between said functions. A reference sign toward a box designates the function assumed by said box. A reference sign toward an arrow designates the data exchanged.

Such an age/content adaptation checking system 1 is in charge of checking for any present watcher 17 if said watcher 17 is adapted to the displayed multimedia content 3 (or if the multimedia content 3 is adapted to said watcher 17). For this purpose said system 1 comprises a watcher detector 10, an age determiner 20, a rank retriever 40, and a comparator 50.

The adaptation between a watcher 17 and a multimedia content 3 may be checked by comparing an age 21 of said watcher 17 and a rank 41 of a multimedia content 3.

The age determiner 20 is in charge of determining an age 21 for each watcher 17 present in the watching area 4 of the multimedia content displaying platform 2. To prepare the work of said age determiner 20, a watcher 17 is preferably previously detected. It is the role of said watcher detector 10, to detect any watcher 17 currently present in said watching area 4. Said watcher detector 10 is able to do so over the watching area 4, and to dynamically keep a record of which watcher 17 is present in said watching area 4 at the present time.

The other branch of the comparison is a rank 41 of the multimedia content 3 currently displayed on the multimedia content displaying platform 2. A rank retriever 40 is in charge of retrieving said rank 41. Said rank retriever 40 may e.g. request said rank 41 from the multimedia content displaying platform 2 which typically has access to said rank 41. A rank retriever 40 may also be able to extract said rank 41 from the multimedia content 3 itself, either by consulting a metadata associated to said multimedia content 3, or even by analyzing the content of said multimedia content 3, as is known in the art.

The comparator 50 can thus compares said determined age(s) 21 to said retrieved rank 41. It then determines a result among "adapted" if the ages 21 of all the watchers 17 present correspond to the rank 41, and "not adapted" if at least one age 21 of a watcher 17 does not correspond to the rank 41. The comparator 50 is further designed to apply an action 52, depending on the result of said comparison.

All of these devices/functions will now be detailed with reference to figure 2.

The age/content adaptation checking system 1 is mainly an information treatment system. In order to be aware of its environment it uses several interfaces. Some of these interfaces are connecting links allowing it to exchange information with other devices or systems. As such, one can mention an interface with the multimedia content displaying platform 2.

An important way for said system 1 to be aware, mainly on what is going on in said watching area 4 of the platform 2, is an interface with a sensor 60. Said sensor 60 is preferentially, but not necessarily, a video camera, since such a sensor is nowadays most often available, being embedded in the display of multimedia content displaying platforms 2.

Said sensor 60 is either already present in the platform 2, e.g. a video camera embedded in a television set, or a web-cam embedded or associated to a familial computer, and is thus interfaced with the system 1 which advantageously reuses it, or comes with said system 1. Said sensor 60, as illustrated in figure 1, is advantageously located so as to be able to detect/sense over the whole watching area 4. One possible such location, especially when it is embedded in the display of the platform 2, is on top of said display, facing the watching area 4, thus watching the watchers 17. Depending on its type, as will be detailed further on, said sensor 60 may be used by several functions of the system 1.

In order to detect a watcher 17 in the watching area 4, the watcher detector 10 regularly scans said watching area 4 in search of a watcher 17. Said scan is realized e.g. using said sensor 60. The aim is here to maintain an accurate knowledge of which watcher 17 is currently present in said watching area 4 at the present time.

To do so said watcher detector 10 may decompose its function in several ones. First the watching area 4 is scanned in search of motions 12. Said function may be realized by a motion detector 11. Said motion detector 11 could use any type of sensor 60 able to detect a motion. For example ultrasound imaging may be used. According to a preferred embodiment, when sensor 60 is a video camera, the motion detector 11 applies a video image treatment enabling motions 12 to be detected. The principle used here mainly consists in analyzing differences between successive images so as to build a motion flow. The principle of such a motion detector 11 is known to the one skilled in the art and is considered to be out of the scope of the present disclosure. The representation of a motion 12 is abusively referred here as the motion 12. Said motion 12, as processed by the system 1, and particularly, as provided by said motion detector 11, is typically a vector figuring the direction of said motion 12. It may advantageously be accompanied by the local image area that effectively moves. Said local image area typically contains the image of the watcher 17, if any, that may be useful during the next steps of the processing.

Every such detected motion 12 is then transmitted to a person extractor 13. Said person extractor 13 is in charge of analyzing said transmitted motion 12 so as to determine if said motion 12 really corresponds to a person 14 and, if any, to extract a representation 14 of said person, abusively referred here as a person 14. Said person extractor 13 is an image analyzer able to recognize a person 14 from e.g. a curtain moving under the wind or a pet crossing the sensing area of said sensor 60. The principle of such a person extractor 13 is known to the one skilled in the art and is considered to be out of the scope of the present disclosure.

When the detected motion 12 effectively appears to be corresponding to a person 14, said person 14, present in the watching area 4, must be considered to be a watcher 17. According to a simplified embodiment, every so detected person 14 may be considered to be a representation of a detected watcher 17, abusively referred here as a detected watcher 17 and then directly transmitted to the age determiner 20.

However, it may be advantageous to distinguish each watcher 17 individually in order to reduce the number of solicitations of the age determiner 20. It may then be interesting, each time a person 14 is so detected, to check if it is really a new watcher 17, e.g. that just appeared/entered in said watching area 4, or only a previously detected watcher 17 that just moved in front of the sensor 60, and thus activated the motion detector 11.

To do so, the system 1 advantageously comprises a current watchers database 16. The system 1 may then use said current watchers database 16 to register a representation of any detected watcher 17 when and as long said watcher 17 is present in the watching area 4.

Advantageously the system 1 may further comprises, in said watcher detector 10, a new watcher checker 15. Said new watcher checker 15 is in charge, based on the use of said current watchers database 16, to check for each newly extracted person 14 found by the previous person extractor 13, if said person 14 corresponds to an already detected watcher 17, and as such already registered in said current watchers database 16 or not.

The representation of a detected watcher 17 may e.g. be the same as the representation of an extracted person 14. However a detected watcher 17 distinguished in that it is unique and is registered in said current watchers database 16.

The new watcher checker 15 is able to compare a person 14 to a watcher 17 to determine if it is a single watcher 17 or two different watchers. This may be done, e.g. using a pattern matching method. So, when a person 14 is extracted by the person extractor 13, it is transmitted to said new watcher checker 15. Since the current watchers database 16 contains one representation of each previously detected watcher 17, the new watcher checker 15 can compare said newly extracted person 14 to each of the detected watchers 17 already registered in said current watchers database 16. If a match is found, it means said newly extracted person 14 only corresponds to an already detected and registered watcher 17, who probably has moved in front of the sensor 60. Said newly extracted person 14 can then simply be ignored and discarded. If, on the contrary, no match is found, it means said newly extracted person 14 corresponds to a new detected watcher 17, who probably just entered the watching area 4. Said newly extracted person 14 can then be considered as a new detected watcher 17. As such, it can be registered by entering it in said current watchers database 16 for future uses.

Advantageously, the number of solicitations of the age determiner 20 can be drastically reduced, by triggering said age determiner 20 only when a new watcher 17 is detected, when it appears as such, instead of triggering it each time a person 14 is extracted.

The age determiner 20 is in charge of providing a determined age 21 associated to each detected watcher 17. To do so, at least two approaches may be considered.

According to a first approach an age 31 can be estimated. Such approach is more general and thus preferred because it does not need any preexisting knowledge about a watcher 17. Said estimated age 31 can be provided by an age estimator 30, which provides it as a determined age 21 to the age determiner 20.

If however, it is accepted to have access to some preexisting knowledge about some potential watcher 17, according to a second approach, said age 33 may be retrieved. Said retrieved age 33 can be provided by an age retriever 32, which more quickly provides it as a determined age 21 to the age determiner 20.

It is further possible to combine these two approaches, thus combining their advantages.

According to said first approach, the age 21, 31 is estimated from a face image 23 of the detected watcher 17 whose age is to be determined. Said first approach is realized by an age estimator 30 and is e.g. developed according to a known principle. Said known principle is described e.g. in the following two papers: [1] G. Guo, G. Mu, Y .Fu, C. Dyer, T. Huang. A Study on Automatic Age Estimation Using a Large Database. ICCV, 2009; [2] Zheng Song, Bingbing Ni, Dong Guo, Terence Sim and Shuicheng Yan. Learning Universal Multi-view Age Estimator by Video Contexts. In ICCV'11.

The general principle of such an approach is to compare a face image 23 of a person/watcher with a large database previously trained over numerous persons, whose respective ages are known.

To be able to use such an approach, the age determiner 20 comprises a face image retriever 22. Said face image retriever 22 is able to retrieve at least one face image 23 of each detected watcher 17 in the watching area 4. This may e.g. be done by extracting a face image 23 from a whole image of the watching area 4 obtained through said sensor 60, said sensor 60 advantageously being a video camera. Said extracting may advantageously be prepared by the already described person extractor 13 that may e.g. indicates where in the watching area the corresponding watcher 17 is located.

Said face image 23 may be either captured by the face image retriever 22 or it can be retrieved from an image previously captured by another function, such as the person extractor 13 or the new watcher checker 15, as indicated by a dotted line arrow in figure 2.

In order to provide a best image to said age estimator 30, said face image retriever 22 may obtain several such face images 23 from a same detected watcher 17.

It has been demonstrated in [1] and [2] that the age estimation obtained by an age estimator 30 is of a better quality when the face image 23 used for estimation is most frontal, that is, when the watcher 17 most directly watches the sensor 60, that is, when the face of the watcher 17 is seen frontally by said sensor 60.

Accordingly, said age determiner 20 advantageously further comprises a best image provider 24 for providing the best image among said several face images 23 from a same detected watcher 17, that is the face image 23 whose angle between the face and the sensor 60 is the smallest, that is the face image 23 corresponding to the face that is nearest to face the image sensor 60.

To get such a result, said best image provider 24 may e.g. analyze all retrieved face images 23 of a same detected watcher 17 to determine for each such face image 23 the orientation of the face. This may be done e.g. by using the relative positions of eyes and nose in each said face image 23.

To do so, said best image provider 24 may advantageously further comprises a face analyzer 25 and an orientation determiner 26. Said face analyzer 25 is in charge of analyzing each face image 23 so as to determine relative positions of eyes and nose in said face image 23. Said orientation determiner 26 is in charge of determining the orientation of a face in said retrieved face image 23 from said relative positions of eyes and nose determined by said face analyzer 25. With said information of respective orientation of the face in each face image 23, the best image provider 24 may then select the best face image 23 being the face image 23 whose orientation is the smallest, that is the one in which the face of the watcher 17 is the most frontal, for a given detected watcher 17. Said best face image 23 is then transmitted to the age estimator 30, thus providing an improved chance of estimating the rightest age. The age estimator 30 provides in return an estimated age 31. Said estimated age 31 may be used as the determined age 21.

Advantageously the system 1 may further comprises a usual watchers database 34. Said usual watchers database 34 may either be directly managed by the system 1, or may be managed by another device, such as e.g. the multimedia content displaying platform 2, with at least an access provided to the system 1. Said usual watchers database 34 is designed to register usual watchers 17 of said multimedia content displaying platform 2 and several characteristics among which can be found at least their respective ages 33. Said usual watchers database 34 advantageously comprises a means for identifying each of said usual watchers.

According to a preferred embodiment, said identifier means can be a face image that can be matched with a face image 23 as obtained by said previously face image retriever 22.

Said age determiner 20 may also comprises an age retriever 32. Said age retriever is able to retrieve an age 33 of a detected watcher 17 from said usual watchers database 34, by matching said detected watcher 17 with one of the usual watchers present in said usual watcher database 34.

The age retriever 32 provides in return a retrieved age 33, being the registered age of the usual watcher in said usual watchers database 34 that matches a detected watcher 17. Said retrieved age 33 may be used as the determined age 21.

As previously mentioned, it is further possible to combine these two approaches, thus combining their advantages. One possible embodiment to combine these two approaches is e.g. to first use the second approach. Said second approach is generally quicker since it is based on the usual watchers database 34 which is drastically smaller than the large database used by the first approach. However it has a good probability of success since said usual watchers database 34 contains the most frequent watchers 17 of the platform 2. In a second time, in case of failure, if a detected watcher 17 cannot be found in said usual watchers database 34, the first approach can be used.

Such a way of doing is advantageous in that it does not need a preexisting knowledge for every potential watcher 17, and any visitor can be managed by the system 1. However, for usual watchers an increased processing speed can be obtained through the use of preexisting knowledge, but said preexisting knowledge is limited to the generally limited number of usual watchers.

When the age determiner 20 has determined a determined age 21, be it an estimated age 31 or a retrieved age 33, for each detected watcher 17 present in the watching area 4, said determined age(s) 21 can be compared to the retrieved rank 41 of the multimedia content 3 currently being displayed. To this purpose, said retrieved rank 41 may be expressed by or associated to an age range R. Typically a multimedia content is considered adapted from a given age A and over. The age range R is then [A, ∞[. It could also be possible to have an age range R = [0, B] or R = [A, B], with B > A.

To the purpose of comparing, said comparator 50 may advantageously further comprises at least one policy 51. Such policy is a mean to configure said comparator 50. A policy defines how to compare said determined age(s) 21 of said detected watcher(s) 17 to said retrieved rank 41. Typically a policy will defines that all the determined ages 21 must be inside an age range R, to output an "adapted" result. Otherwise, is at least one of the determined age(s) 21 of the detected watcher(s) 17 is outside of said range R, a "not adapted" result must be outputted. Other rules of defining the result of the comparison may be defined by such a policy 51. Said result then depends on all the detected watchers 17 present in the watching area 4.

Such policy 51 may also define which action 52 to apply, either for an "adapted" result or for a "not adapted" result. At least one action 52 may be selected among several possible ones.

A first action 52 may be to display a warning on said multimedia content displaying platform 2. Such a warning may e.g. details the rank of the multimedia content 3, either as a pictogram or as an explicit adapted age range. Since the information is available, it may also indicate which age(s) has/have the not adapted watcher(s) or the number and/or the locations of not adapted watcher(s) 17. Such a warning acts as a reminder, for not adapted watcher(s), and even for adapted watcher(s) 17 who may not have paid attention to the presence in the watching area 4 of at least one not adapted watcher 17.

Another action 52 may be to stop the display of the multimedia content 3.

Another action 52 may be to hide or to blur said multimedia content 3.

Such a local masking action (stop, hide, blur, etc.) may be partial and directed to only a part of a multimedia content 3. It may be directed to either only a given time sequence of said multimedia content 3, or only to the video, or only to the audio, depending on which part is ranked so as at least one watcher 17 becomes not adapted.

Such a warning/stopping/hiding/blurring may here be maintained as long as the "not adapted" condition exists. Contrary to prior art notifications, not necessarily displayed at the right time and even if all watchers were adapted, said warning/masking is here purposely displayed/applied and when needed. It can then be maintained. Alternately an authorized manager may be entitled to get rid of it, after authentication e.g. by using a password, but this is made in awareness.

Such a local action 52 is triggered by the system 1 sending a command to the multimedia content displaying platform 2.

Another action 52 may be to send an alert on any other predefined media 61 to a predefined person, such as a parent, tutor or any authorized person. Said other predefined media 61 may be a SMS, an email, a phone call or another display. This allows alerting, typically a parent, through a SMS on his phone 61 or through a warning on his own television set 61, that the platform 2, monitored by the system 1 is displaying a multimedia content 3 not adapted to at least one of the present watcher(s) 17. This is useful for a parent watching another multimedia content in another location (television set alert) or even away from home (mail or phone alert). Said alert may even be detailing: the multimedia content 3, the rank 41, and/or the determined age(s) 21 of the detected watchers 17.

Another action 52 may be "no action". Such "no action" is typically selected when all determined age(s) 21 of the detected watcher(s) 17 and rank 41 are adapted. This is advantageous over prior art in that no alert, warning or notification are uselessly annoying adapted watchers 17.

## Claims

1. An age/content adaptation checking system (1), usable with a multimedia content displaying platform (2), for checking an adaptation between watcher(s) (17) and a displayed multimedia content (3), comprising:
a watcher detector (10), for detecting any watcher (17) present in a watching area (4) of said multimedia content displaying platform (2),
an age determiner (20) for determining an age (21) of each detected watcher (17),
a rank retriever (40) for retrieving a rank (41) of said displayed multimedia content (3), and
a comparator (50) for comparing said determined age(s) (21) to said retrieved rank (41) and applying an action (52), depending on the result of said comparison.

2. The system of claim 1, wherein said watcher detector (10) further comprises:
- a motion detector (11), for detecting any motion (12) in said watching area (4), and
- a person extractor (13) for extracting a person (14) out of a detected motion (12).

3. The system of any one of claims 1 or 2, further comprising a current watchers database (16) for registering any detected watcher (17) present in said watching area (4).

4. The system of claim 3, wherein said watcher detector (10) further comprises:
- a new watcher checker (15) for checking if an extracted person (14) is already registered in said current watchers database (16), said extracted person (14) being considered as a detected watcher (17) if said extracted person (14) is not already registered in said current watchers database (16).

5. The system of any one of claims 1 to 4, wherein said age determiner (20) further comprises:
- a face image retriever (22), for retrieving at least one face image (23) of each detected watcher (17), and
- an age estimator (30) for estimating an age (31) of any detected watcher (17) from a retrieved face image (23) of said detected watcher (17), said estimated age (31) becoming a determined age (21).

6. The system of claim 5, wherein said age determiner (20) further comprises:
- a best image provider (24) for providing the most frontal face image (23) among said at least one retrieved face image (23).

7. The system of claim 6, wherein said best image provider (24) further comprises:
- a face analyzer (25) for analyzing a retrieved face image (23) and for determining relative positions of eyes and nose in said face image (23), and
- an orientation determiner (26) for determining an orientation of a face in a retrieved face image (23) from relative positions of eyes and nose in said retrieved face image (23).

8. The system of any one of claims 1 to 7, further comprising a usual watchers database (34) for registering usual watchers of said multimedia content displaying platform (2) and their respective ages (33).

9. The system of claim 8, wherein said age determiner (20) further comprises:
- an age retriever (32) for retrieving an age (33) of a detected watcher (17) from said usual watchers database (34) if said detected watcher (17) is present in said usual watcher database (34), said retrieved age (33) becoming a determined age (21).

10. The system of any one of claims 1 to 9, wherein said comparator (50) further comprises at least one policy (51) defining how to compare said determined age(s) (21) of said detected watcher(s) (17) to said retrieved rank (41), to determine if said detected watcher(s) (17) is/are adapted to said displayed multimedia content (3), and which action (52) to apply.

11. The system of any one of claims 1 to 10, wherein said comparator (50) is designed to select at least one action (52) among:
- displaying a warning on said multimedia content displaying platform (2), and/or
- stopping the display of said multimedia content (3), and/or
- hiding or blurring said multimedia content (3), and/or
- sending an alert on any other predefined media (61), such as SMS, email or another display.

12. The system of any one of claims 1 to 10, wherein said comparator (50) is designed to select no action when age(s) (21) and rank (41) are adapted.
